# EUROPÄISCHE PATENTANMELDUNG

(11) **EP 1 754 631 A1**
(43) Veröffentlichungstag der Anmeldung: **21.02.2007**
(21) Anmeldenummer: 06016588.3
(22) Anmeldetag: 08.08.2006
(51) Int. Cl.: B60R 9/06, B60R 9/10

(54) **Transportvorrichtung am Heck eines Kastenwagens**

(30) Priorität: 19.08.2005 DE 102005039254
(71) Anmelder: Inter Agilis Handelsgesellschaft m.b.H., 5300 Hallwang (AT)
(72) Erfinder: Hanusch, Marion, 83435 Bad Reichenhall (DE); Hanusch, Johann, 83435 Bad Reichenhall (DE)
(74) Vertreter: Berngruber, Otto

(57) **Zusammenfassung**

Um mit einem Kastenwagen (1) mit einer zweiflügeligen Hecktür (2) Fahrräder und dergleichen Gegenstände zu transportieren, ist am Heck des Kastenwagens (1) unterhalb der Hecktür (2) ein Querholm (7) angeordnet, auf dem ein Schlitten (11) verschiebbar gelagert ist. Der auf dem Schlitten (11) befestigte, zu transportierende Gegenstand ist damit über den Türflügel (4) hinaus zur anderen Seite verschiebbar.

## Beschreibung

Die Erfindung bezieht sich auf eine Vorrichtung zum Transport von Fahrrädern und dergleichen Gegenständen am Heck eines Kastenwagens mit einer zweiflügeligen Hecktür und einem am Kastenwagen befestigten Querholm zur Aufnahme des zu transportierenden Gegenstandes.

Kastenwagen weisen einen geschlossenen Blechaufbau mit einer zweiflügeligen Tür am Heck auf. Derartige serienmäßige Kastenwagen werden von Wohnmobil-Herstellern zu Wohnmobilen ausgebaut.

Da ein Großteil der Wohnmobil-Reisenden mit Fahrrädern unterwegs ist, ist es beispielsweise bekannt, an der Hecktür einen Fahrradträger zu befestigen. Zur Aufnahme schwererer Gegenstände, wie Motorräder, wird am Kastenwagen unterhalb der Hecktür ein Querholm befestigt, der sich über beide Türflügel erstreckt. Im Heck des Kastenwagens ist häufig ein Stauraum für Gepäck und dergleichen vorgesehen. Das auf dem Querholm befestigte Motorrad versperrt jedoch die gesamte Hecktür. D.h., zum Öffnen der Hecktür, um beispielsweise aus dem Stauraum ein Gepäckstück zu holen, muss das Motorrad in einer anstrengenden und zeitraubenden Prozedur vom Querholm gelöst, dann herunter- und wieder hinaufgehoben und schließlich am Querholm wieder befestigt werden.

Aufgabe der Erfindung ist es, eine einfach aufgebaute Transportvorrichtung am Heck eines Kastenwagens bereitzustellen, welche auch schwere Gegenstände aufnehmen kann, ohne die Hecktür zu blockieren.

Dies wird erfindungsgemäß mit der im Anspruch 1 gekennzeichneten Transportvorrichtung erreicht. In den Unteransprüchen sind vorteilhafte Ausgestaltungen der Erfindung wiedergegeben.

Bei der erfindungsgemäßen Transportvorrichtung ist auf dem Querholm, der am Heck des Fahrzeugs befestigt ist, ein Schlitten vorgesehen, der seitlich über einen der beiden Türflügel hinaus zum anderen Türflügel verschiebbar ist. Der Querholm ist unterhalb der Hecktür angeordnet.

Damit kann ein sich über beide Türflügel, also praktisch die gesamte Fahrzeugbreite erstreckender Querholm unterhalb der Tür am Heck des Kastenwagens befestigt werden, so dass mit der erfindungsgemäßen Vorrichtung auch schwere Gegenstände, wie Motorräder, Quads, Transportboxen und dergleichen transportiert werden können. Der Schlitten weist dabei etwa die gleiche Länge wie der Querholm auf.

Da der Schlitten mit dem darauf befestigten Gegenstand über einen der beiden Türflügel hinaus verschiebbar ist, kann dieser Türflügel geöffnet werden, ohne den Gegenstand von der Transportvorrichtung herunternehmen zu müssen.

Der Türflügel, über den der Schlitten hinaus verschiebbar ist, ist vorzugsweise der dem Fahrbahnrand benachbarte Türflügel, also der Türflügel auf der Beifahrerseite, d.h. bei Fahrzeugen für Rechtsverkehr der rechte Türflügel und bei Fahrzeugen für Linksverkehr der linke Türflügel.

Um auch Gegenstände unterschiedlicher Breite transportieren zu können, etwa einen Quad, sind die Träger, mit denen der Querholm am Fahrzeug befestigt ist, vorzugsweise in Fahrzeuglängsrichtung verschiebbar ausgebildet. Dazu können die Träger z.B. in Profilen teleskopierbar geführt sein, die am Fahrzeugboden befestigt sind.

Der Schlitten ist vorzugsweise mit Tragrollen auf beiden Seiten des Querholms gelagert. Dazu sind auf beiden Seiten des Querholms Führungen für die Tragrollen vorgesehen. Die Tragrollen sind paarweise angeordnet, wobei jedes Paar mit der einen Rolle mit der Führung auf der einen Seite und mit der anderen Rolle mit der Führung auf der anderen Seite des Querholms geführt ist. Dabei sind wenigstens zwei im Abstand angeordnete Tragrollenpaare vorgesehen, insbesondere drei Tragrollenpaare, nämlich je ein Paar an den beiden Endbereichen des Schlittens und ein Paar im mittleren Schlittenbereich. Die Tragrollen können dabei mit einem Wälzlager am Schlitten gelagert sein.

Damit der Schlitten nicht nach unten kippen kann, wenn er über den einen Türflügel hinaus zu der gegenüberliegenden Fahrzeugseite geschoben worden ist, besteht zumindest eine der beiden Führungen seitlich am Querholm aus einer unteren Führung, die die Hauptlast aufnimmt, und einer oberen Führung, die das Kippen verhindert.

Die Drehachsen der Tragrollen verlaufen waagerecht in Fahrzeuglängsrichtung. Um den Schlitten gegenüber dem Querholm auch seitlich zu führen, können zusätzlich an beiden Seiten des Schlittens Führungsrollen mit senkrechter Drehachse befestigt sein, die sich seitlich am Querholm abstützen. Da sie keine großen Kräfte aufzunehmen haben, können diese Führungsrollen auf einem senkrechten Bolzen gelagert sein und beispielsweise aus Kunststoff bestehen.

Um die Handhabung der erfindungsgemäßen Transportvorrichtung weiter zu erleichtern, ist vorzugsweise der Schlitten nach Verschiebung über den einen Türflügel hinaus nach unten kippbar ausgebildet. Damit kann der Schlitten nach unten auf die Fahrbahn gekippt und damit beispielsweise ein Motorrad auf den Schlitten geschoben werden, der dann in die Waagerechte gekippt und in die Transportstellung auf den Querholm vor beiden Türflügeln geschoben wird.

Vorzugsweise wird die Kippachse durch die Drehachse des Tragrollenpaares gebildet, das im mittleren Bereich des Querholms angeordnet ist.

Um den Schlitten in der Transportstellung zu fixieren, ist eine Verriegelungseinrichtung vorgesehen, die vorzugsweise einen am Schlitten verschiebbar geführten Verriegelungsbolzen aufweist, der in eine Verriegelungsausnehmung an dem Querholm einrastbar ist.

Zum Kippen des Schlittens ist der Verriegelungsbolzen vorzugsweise koaxial zur Drehachse der Tragrolle am Schlitten gelagert und in eine Verriegelungsausnehmung am Querholm einrastbar, die im mittleren Bereich zwischen dem linken und dem rechten Ende des Querholms vorgesehen ist.

Damit der Schlitten mit seinem Ende, das dem Türflügel benachbart ist, von dem er weggeschoben worden ist, nach oben gekippt werden kann, muss die obere Führung seitlich am Querholm in dem Bereich der Tragrollen, die auf der Seite der Kippachse an dem Schlitten angeordnet sind, welche dem Türflügel benachbart ist, über den der Schlitten hinaus verschoben worden ist, entfernt werden. D.h., bei Rechtsverkehr und bei drei Paaren von Führungsrollen muss die obere Führung in dem Bereich entfernt werden, den die beiden am rechten Ende des Schlittens angeordneten Tragrollen einnehmen, wenn der Schlitten nach links in die Kippstellung verschoben worden ist.

Das Entfernen der oberen Führung kann auf verschiedene Art und Weise erfolgen. Beispielsweise ist es möglich, die obere Führung in einen mit dem Querholm starr verbundenen Abschnitt vor dem einen, bei Rechtsverkehr linken Türflügel, und einen weiteren Abschnitt vor dem rechten Türflügel zu teilen, welcher aus dem Bereich der nach oben zu kippenden Tragrollen längs des Querholms verschiebbar geführt ist. Dazu können in dem verschiebbaren Abschnitt beispielsweise sich in Längsrichtung des Querholms erstreckende Längsschlitze vorgesehen sein, die von am Querholm befestigten Führungsbolzen durchsetzt werden, die am oberen Ende mit einer Erweiterung versehen sind, die die Längsschlitze übergreifen.

Nachstehend ist die erfindungsgemäße Transportvorrichtung anhand der beigefügten Zeichnung beispielhaft näher erläutert. Darin zeigen:
- Figur 1 bis 3: die Heckansicht eines Kastenwagens mit der Transportvorrichtung in Fahrstellung bzw. mit zur Seite verschobenem bzw. nach unten gekipptem Schlitten, wobei die (nicht sichtbaren) Rollen am Schlitten angedeutet sind;
- Figur 4: eine vergrößerte Ansicht der rechten Seite der Transportvorrichtung mit dem gekippten Schlitten nach Figur 3; und
- Figur 5: einen Querschnitt entlang der Linie V-V in Figur 1 mit zwei in Längsrichtung des Querholms versetzten waagerechten Schnittflächen.

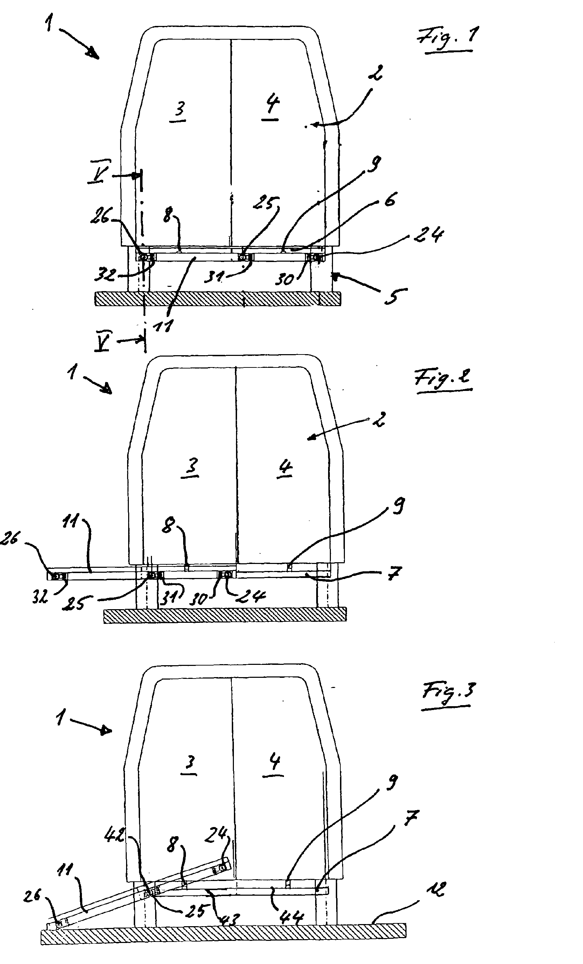

Gemäß Figur 1 bis 3 weist ein Kastenwagen 1 eine Hecktür 2 mit zwei um eine senkrechte Achse an der einen bzw. anderen Seitenwand verschwenkbar angelenkten Türflügeln 3, 4 auf.

Am Heck des Kastenwagens 1 ist außen eine Transportvorrichtung 5 vorgesehen. Dazu ist am Boden 6 des Kastenwagens 1 ein Querholm 7 mit zwei Trägern 8, 9 befestigt, die sich in Fahrzeuglängsrichtung erstrecken. Der Querholm 7 ist unterhalb der Tür 2 angeordnet.

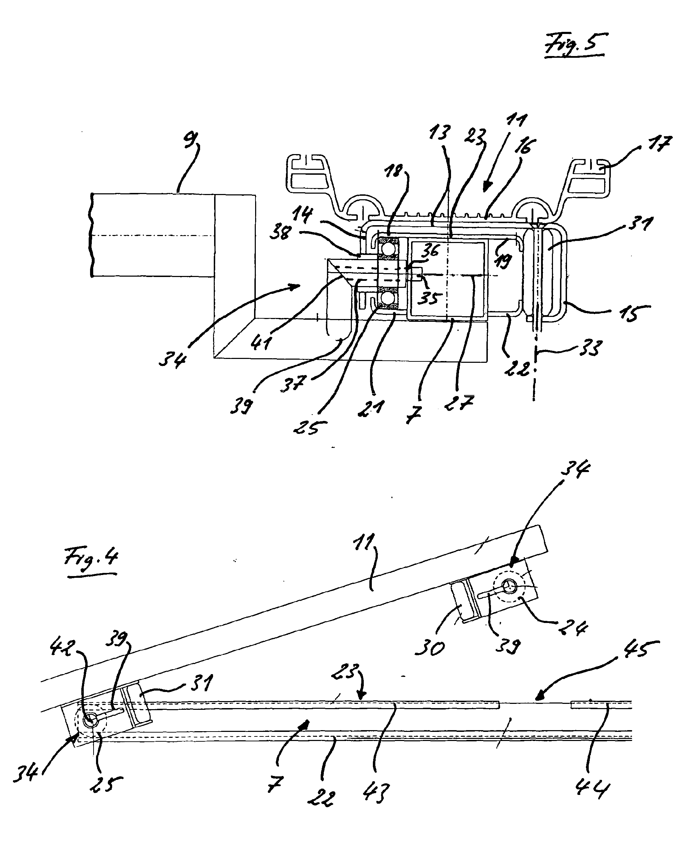

Auf dem Querholm 7 ist ein Schlitten 11 verschiebbar gelagert. Damit ist der Schlitten 11 zur Seite, d.h. nach links über den rechten Türflügel 4 hinaus verschiebbar (Figur 2). Der Schlitten 11 ist in Fahrstellung nach Figur 1 und in der zur Seite verschobenen Stellung nach Figur 2 unterhalb der Hecktür 2 angeordnet.

Wenn auf dem Schlitten 11 ein (nicht dargestellter) zu transportierender Gegenstand, beispielsweise ein Motorrad befestigt ist, sind in der Fahrstellung gemäß Figur 1 beide Türflügel 3, 4 versperrt, so dass sie nicht geöffnet werden können. Demgegenüber kann der rechte Türflügel 4 gemäß Figur 2 in der nach links geschobenen Position des Schlittens 11 mit darauf befestigtem Motorrad geöffnet werden.

Wie aus Figur 3 ersichtlich, ist der Schlitten 11 in der nach links geschobenen Position gemäß Figur 2 zudem auf die Fahrbahn 12 kippbar, so dass beispielsweise ein Motorrad auf bzw. von dem Schlitten 9 geschoben werden kann.

Um den Abstand zwischen Querholm 7 und dem Heck des Kastenwagens 1 an die Breite des Motorrads oder sonstigen zu transportierenden Gegenstandes anpassen zu können, sind die Träger 7, 8 am Boden 6 des Fahrzeugs 1 verschiebbar, beispielsweise teleskopierbar geführt.

Gemäß Figur 5 ist der Querholm 7 durch ein Vierkantrohr gebildet. Wie anhand des Trägers 9 in Figur 5 gezeigt, ist der Querholm 7 an dem nach unten abgewinkelten Ende der Träger 8, 9 befestigt.

Der Schlitten 11 weist einen U-förmigen Abschnitt 13 auf, der mit seinen beiden nach unten gerichteten Schenkeln 14, 15 den Querholm 7 auf beiden Seiten übergreift. Auf dem U-förmigen Abschnitt 13 ist ein rinnenförmiges Profil 16 befestigt, das Ausnehmungen 17 und dergleichen aufweist, um den nicht dargestellten, zu transportierenden Gegenstand, z.B. ein Motorrad, beispielsweise mit Gurten oder dergleichen Zugmitteln auf dem Profil 16 festzuzurren.

Der Schlitten 11 ist seitlich am Querholm 7 gelagert. Dazu sind auf beiden Seiten des Querholms 7 eine obere Führung 18, 19 und eine untere Führung 21, 22 vorgesehen. Die obere Führung 18, 19 wird durch eine Platte 23 gebildet. Zwischen oberer Führung 18, 19 und unterer Führung 21, 22 sind auf beiden Seiten des Querholms 7 paarweise Tragrollen 26 geführt, die am Schlitten 21 drehbar gelagert sind. Wegen des versetzten Schnitts ist in Figur 5 nur die eine Tragrolle 26 des Tragrollenpaares am linken Ende des Schlittens 11 zu sehen.

Insgesamt sind drei Tragrollenpaare 24, 25, 26 vorgesehen (Figur 1 und 2), und zwar ein Paar 24, 26 im rechten bzw. linken Endbereich des Schlittens 11 und ein Paar 25 im mittleren Bereich. Die Drehachse der Tragrollen 24, 25, 26 erstreckt sich, wie in Figur 5 anhand der Drehachse 27 für die Rolle 26 gezeigt, waagerecht in Fahrzeuglängsrichtung. Die Tragrollen sind an den seitlichen Schenkeln 14, 15 des Schlittens 11 befestigt und mit einem Kugellager 28 drehbar gelagert.

Um den Schlitten 11 auf dem Querholm 7 seitlich zu stabilisieren, ist zusätzlich im Abstand von jedem Tragrollenpaar 24, 25, 26 an dem Schlitten 11 auf der vom Heck abgewandten Seite eine Führungsrolle 30, 31, 32 drehbar gelagert. Die Führungsrollen 30, 31, 32 weisen gemäß Figur 5 eine senkrechte Drehachse 33 auf und stützen sich an der oberen und unteren Führung 19, 22 am Querholm 7 ab.

Um den verfahrbaren Schlitten 11 in der Fahrstellung des Kastenwagens 1 gemäß Figur 1 zu fixieren, ist eine Verriegelungseinrichtung 34 vorgesehen, mit der der Schlitten 11 am Querholm 7 verriegelbar ist. Dazu ist gemäß Figur 5 ein Verriegelungsbolzen 35 vorgesehen, der in eine Verriegelungsausnehmung 36 in dem Querholm 7 einrastet.

Der Verriegelungsbolzen 35 ist, wie gestrichelt angedeutet, in einer Hülse 37 koaxial zur Drehachse 27 verschiebbar angeordnet, wobei die Hülse 37 in einer Außenhülse 38 sitzt, die am Schenkel 14 befestigt ist und auf der das Kugellager 28 angeordnet ist. Zur Betätigung des Verriegelungsbolzens 35 ist an seinem von der Ausnehmung 36 abgewandten Ende ein Betätigungshebel 39 befestigt, der sich an der als Nockenfläche 41 ausgebildeten Stirnfläche der Hülse 37 abstützt. Durch Drehung des Hebels 39 um die Achse 27 kann damit der Verriegelungsbolzen 35 aus der Ausnehmung 36 im Querholm 7 gezogen werden.

Gemäß Figur 3 und 4 ist der Schlitten 11, wenn er nach links verschoben worden ist, nach unten kippbar. Die Kippachse 42 wird dabei durch die Drehachse der Tragrollen 25 des mittleren Tragrollenpaares gebildet, das in gleicher Weise mit einem in eine Ausnehmung in dem Querholm 7 eingreifenden Verriegelungsbolzen versehen ist, wie anhand von Figur 5 für die Tragrolle 26 gezeigt. Dadurch stellt der Verriegelungsbolzen im mittleren Tragrollenpaar 25 zugleich die Kippachse 42 dar.

Damit der Schlitten 11 gekippt werden kann, muss die obere Führung 18, 19 im Bereich der Tragrollen 24 am rechten Ende des Schlittens 11 entfernt werden, also allgemein im Bereich der Tragrollen, die auf der Seite der Kippachse 42 an dem Schlitten 11 angeordnet sind, welche dem Türflügel benachbart ist, über den der Schlitten 11 hinaus verschoben wird.

Dazu ist die Platte 23 und damit die obere Führung 18, 19 geteilt. D.h., sie weist einen mit dem Querholm 7 starr verbundenen linken Abschnitt 43 und einen weiteren Abschnitt 44 auf, der sich entlang des rechten Türflügels 4 bis in den rechten Bereich des linken Türflügels 3 hinein erstreckt und nach rechts verschoben werden kann, um die nach oben zu kippenden Tragrollen 24 freizugeben, wie in Figur 4 anhand der Öffnung 45 zu sehen.

## Patentansprüche

1. Vorrichtung zum Transport von Fahrrädern und dergleichen zu transportierenden Gegenständen am Heck eines Kastenwagens (1) mit einer zweiflügeligen Hecktür (2) und einem am Kastenwagen (1) befestigten Querholm (7), **dadurch gekennzeichnet, dass** auf dem Querholm (7) ein Schlitten (11), auf dem der zu transportierende Gegenstand befestigbar ist, seitlich über einen der beiden Türflügel (4) hinaus verschiebbar gelagert ist.

2. Vorrichtung nach Anspruch 1, **dadurch gekennzeichnet, dass** der Querholm (7) mit wenigstens einem Träger (8, 9) am Boden (6) des Kastenwagens (1) befestigt ist.

3. Vorrichtung nach Anspruch 2, **dadurch gekennzeichnet, dass** der Träger (8, 9) in Fahrzeuglängsrichtung verschiebbar geführt ist.

4. Vorrichtung nach einem der vorstehenden Ansprüche, **gekennzeichnet durch** eine Verriegelungseinrichtung (34), mit der der Schlitten (11) am Querholm (7) verriegelbar ist.

5. Vorrichtung nach einem der vorstehenden Ansprüche, **dadurch gekennzeichnet, dass** der Schlitten (11) seitlich am Querholm (7) gelagert ist.

6. Vorrichtung nach Anspruch 5, **dadurch gekennzeichnet, dass** auf beiden Seiten des Querholms (7) Führungen zur Aufnahme von am Schlitten (11) um eine sich in Fahrzeugslängsrichtung erstreckende waagerechte Drehachse (7) drehbar gelagerte Tragrollen (24, 25, 26) vorgesehen sind.

7. Vorrichtung nach Anspruch 6, **dadurch gekennzeichnet, dass** die Führungen aus einer oberen Führung (18, 19) und einer unteren Führung (21, 22) bestehen.

8. Vorrichtung nach einem der vorstehenden Ansprüche, **dadurch gekennzeichnet, dass** am Schlitten (11) Führungsrollen (30, 31, 32) mit senkrechter Drehachse (33) befestigt sind, die sich seitlich am Querholm (7) abstützen.

9. Vorrichtung nach Anspruch 1, **dadurch gekennzeichnet, dass** der über den einen Türflügel (4) hinaus zur Seite verschobene Schlitten (11) um eine Kippachse (42) nach unten kippbar ausgebildet ist.

10. Vorrichtung nach Anspruch 6 und 9, **dadurch gekennzeichnet, dass** die Kippachse (42) durch die Drehachse der Tragrollen (25) im mittleren Bereich des Schlittens (11) gebildet wird.

11. Vorrichtung nach Anspruch 4, **dadurch gekennzeichnet, dass** die Verriegelungseinrichtung (34) einen zur Drehachse (33) der Tragrolle (24, 25, 26) koaxialen Verriegelungsbolzen (35) aufweist, der in eine Verriegelungsausnehmung (36) am Querholm (7) einrastbar ist.

12. Vorrichtung nach Anspruch 10 und 11, **dadurch gekennzeichnet, dass** die Kippachse (42) durch den Verriegelungsbolzen (35) der Tragrolle (25) im mittleren Bereich des Schlittens (11) gebildet wird.

13. Vorrichtung nach Anspruch 7 und einem der Ansprüche 9 bis 12, **dadurch gekennzeichnet, dass** die obere Führung (18, 19) am Querholm (7) im Bereich der Tragrollen (24), die auf der Seite der Kippachse (42) an dem Schlitten (11) angeordnet sind, welche dem Türflügel (4) benachbart sind, über den der Schlitten (11) hinaus verschiebbar ist, entfernbar ist.

14. Vorrichtung nach Anspruch 13, **dadurch gekennzeichnet, dass** die obere Führung (18, 19) einen mit dem Querholm (7) starr verbundenen Abschnitt (43) und einen weiteren Abschnitt (44) aufweist, der zum Entfernen der oberen Führung (18, 19) aus dem Bereich der nach oben zu kippenden Tragrollen (26) längs des Querholms (7) am Querholm (7) verschiebbar befestigt ist.
